# EUROPEAN PATENT APPLICATION

(11) **EP 4 344 812 A1**
(43) Date of publication of application: **03.04.2024**
(21) Application number: 23199113.4
(22) Date of filing: 22.09.2023
(51) Int. Cl.: B23K 20/10, B23K 20/26, B23K 37/02

(54) **COMPLIANT WORK PIECE PROCESSING TOOL WITH LOCKING MECHANISM**

(30) Priority: 29.09.2022 US 202217956113
(71) Applicant: Branson Ultrasonics Corporation, Brookfield, CT 06804 (US)
(72) Inventor: DIKER, Michael J., Danbury, CT 06811 (US)
(74) Representative: J A Kemp LLP

(57) **Abstract**

A work piece processing tool includes a tool device and a work piece that can be held by a workpiece holder. A servo-elastic actuator system includes a servo actuator and a compliance elastic member that connects one of the tool device and the work piece holder to the servo actuator. The servo-elastic actuator system moves the one of the tool device and the work piece holder toward the other of the tool device and the work piece holder. A locking mechanism engages the one of the tool device and the work piece holder to the servo actuator to limit movement of the one of the tool device and the work piece holder relative to the servo actuator.

## Description

### FIELD

The present disclosure relates to a work piece processing device with a servo-elastic actuator system having simultaneous precision force and position control, a weight compensating elastic member and a locking mechanism for locking out the elastic member during tool movement.

### BACKGROUND

This section provides background information related to the present disclosure which is not necessarily prior art.

Work piece processing devices as used herein are devices that apply force to a work piece (or work pieces) during processing of the work piece. In some devices, the force is part of and contributes to the performance of the work on a work piece (or work pieces), such as in welding, and in other cases, the force is not part of the performance of the work on the work piece but rather is applied to clamp the work piece in place as the work is performed on the work piece. Such work processing devices have actuators that apply the force to the work pieces such as by moving a tool against the work piece or applying a clamp to the work piece to hold it in place during processing. Such work piece processing devices can include devices for ultrasonic, vibration, laser, thermal, spin or infrared processing of plastics or metal where force is applied to the work piece, such as welding, staking, swaging, and cutting. Work piece processing devices that apply force to the work piece during processing need actuators that can control both force and position.

Pneumatic actuators are good at providing a constant force regardless of the actuator's position when in contact with a relatively stiff surface, but are not very precise at controlling position. Servo-actuators on the other hand are precise at controlling position but not that good at controlling force when in contact with a relatively non-compliant or stiff surface. A servo-actuator is a mechanism that provides position controlled motion in a mechanical system in response to an electrical input signal using feedback of an output of the servo actuator for position control.

Use of servo-actuators for ultrasonic welding, vibration welding, laser welding, thermal welding, spin welding, infrared welding and ultrasonic cutting could control position very accurately, about a thousandth of an inch, but could not control force to under plus or minus 40 pounds. The problem arises from the relative noncompliance of the material of the work piece being pressed against during welding. Even though the servo-actuators can resolve the position to within a thousandth of an inch, this small relative motion, given the stiffness of the material being pressed against, results in a large change in force- of about 40 pounds for a typical piece of plastic, and even higher for a piece of metal. This problem of force to position sensitivity is inherent with servo-actuators when pushing against a relatively non-compliant surface, regardless of how good the control system is for the servo-actuator.

Servo actuators often have a torque control mode that gives a degree of control of the force, such as that described in U.S. Pat. No. 8,720,516 for "Ultrasonic Press Using Servo Motor with Delayed Motion." But again, because of the noncompliance of the surface being pushed against, the force varies by a high percentage of the total load.

One well understood method in the prior art to control force precisely with a servo-actuator is to have the servo-actuator press against a long travel spring. This gives very good force control, but does not have any position control. U.S. Pat. No. 4,817,848 for "Compliant Motion Servo" discloses the use of a long travel spring with a servo-actuator to control force, but switches over to a closed loop position control at the end of motion, and therefore loses control of force at the end of the process.

JP2013-063521 for an "Ultrasonic Welding Device, Ultrasonic Welding Method, Wiring Device" discloses an ultrasonic welder which performs ultrasonic welding by pressing a tool horn attached to an ultrasonic sliding unit slidable relative to a body frame against a work piece that includes a first linear scale for measuring a moving amount of the tool horn, a compression spring pressing the ultrasonic sliding unit, a driving means compressing the compression spring, a second linear scale measuring a compressed amount of the compression spring, and a load cell measuring a pressing force by the compression spring. When compressing the compression spring by driving the driving means, the pressing force by the compression spring measured by the load cell, the moving amount of the tool horn measured by the first linear scale, and the compressed amount of the compression spring measured by the second linear scale are fed back to the driving means and controlled to perform ultrasonic welding while imparting an optional pressing force to the work piece. However, when the compression spring can only be in compression, the weight of the tool horn and carriage bottom out and the system is not able to distinguish forces exerted on the work pieces being welded at forces below the weight load of the tool horn and carriage.

Commonly assigned U.S. Patent No. 10,864,608 discloses a work piece processing device with a servo-elastic actuator system that provides improved force control of a servo-actuated work piece processing device.

### SUMMARY

This section provides a general summary of the disclosure, and is not a comprehensive disclosure of its full scope or all of its features.

In a compliant assembly in series with an actuator, for example U.S. Patent No. 10,864,608 the changes in velocity can cause a reaction in the springs. This reaction causes harmonic 'ringing' movement at the transitions that lasts for a time dependent on mass and change in velocity. This limits the possible set values when there is a desired impact or force build up on the work piece. The present disclosure provides a mechanism to restrict the movement of the compliant assembly when desired and allow the compliant assembly to move freely when desired. The mechanism will have an adjustable range to allow the compliant assembly to adjust to any changes in mass of the overall system. The mechanism may be able to control the length of the assembly to return to a desired length for a given mass. The mechanism may have an adjustable stop to prevent the compliant assembly from further extending but allowing compression. The mechanism may engage a damper to restrict movement and disengage to allow for free movement.

Locking the spring assembly during the transitions eliminates the harmonic response, then unlocking at a set constant velocity or set acceleration allows for utilizing the spring system as desired with more control over the impact and force build up. This allows for faster velocities, heavier horns, or a combination thereof, while remaining in control and having wider ranges possible for impact and force build up. This also allows for lower force profiles for smaller, delicate parts and more repeatable force profiles at low forces, for example.

In an embodiment, a work piece processing tool includes a tool device and a work piece holder. A servo-elastic actuator system includes a servo actuator and a compliance elastic member that connects the tool device to the servo actuator. The servo-elastic actuator system moves the tool device toward the work piece holder. A locking mechanism engages the tool device to the servo actuator to limit movement of the tool device relative to the servo actuator.

There is disclosed a work piece processing tool, comprising: a tool device and a work piece; a servo-elastic actuator system including a servo actuator and a compliance elastic member, wherein the servo-elastic actuator system moves one of the tool device and the work piece toward the other of the tool device and the work piece; and a locking mechanism for locking out the compliance elastic member to limit movement of the one of the tool device and work piece holder relative to the servo actuator.

Optionally, the locking mechanism includes an actuator and a clamp mechanism that is operably engageable with the one of the tool device and the work piece holder.

Optionally, the clamp mechanism includes an electromagnet that is magnetically engageable with the one of the tool device and the work piece holder.

Optionally, the clamp mechanism includes at least one pivot arm that is pivotally actuated by the actuator.

Optionally, the clamp mechanism includes at least one arm that is slidably actuated by the actuator.

Optionally, the clamp mechanism includes at least one arm having a damping material for engaging the one of the tool device and work piece holder.

Optionally, the locking mechanism includes at least one arm including an electromagnet that is magnetically engageable with the one of the tool device and work piece holder.

Optionally, the locking mechanism includes an arm attached to the one of the tool device and the work piece holder and an actuator that lockingly engages the arm to the servo actuator.

Optionally, the at least one arm includes a toothed rack and the actuator includes a toothed pinion that engages the toothed rack.

Optionally, the locking mechanism includes an arm having a stop member at a first end and engaged by an actuator at a second end.

Optionally, the arm includes a toothed rack and the actuator includes a toothed pinion that engages the toothed rack.

An embodiment includes a method of operating a work piece processing tool having a tool device for processing a work piece on a work piece holder and including a servo-elastic actuator system including a servo actuator and a compliance elastic member, wherein the servo-elastic actuator system moves the tool device toward the work piece holder includes engaging a locking mechanism between the tool device and the servo actuator; actuating the servo actuator to lower the tool device to the work piece; disengaging the locking mechanism; and actuating the tool device and the servo-actuator to perform a desired processing of the work piece.

There is disclosed a method of operating a work piece processing tool having a tool device for processing a work piece and including a servo-elastic actuator system including a servo actuator and a compliance elastic member, wherein the servo-elastic actuator system moves one of the tool device and the work piece toward the other of the tool device and the work piece, comprising: engaging a locking mechanism between the one of the tool device and the work piece and the servo actuator; actuating the servo actuator to move the one of the tool device and the work piece toward the other of the tool device and the work piece; disengaging the locking mechanism; and actuating the tool device and the servo-actuator to perform a desired processing of the work piece.

Optionally, the engaging a locking mechanism includes actuating a clamp arm to connect the one of the tool device and the work piece to the servo actuator.

Optionally, the clamp arm includes an electromagnet for engaging the one of the tool device and the work piece.

Optionally, the clamp arm includes a damping material for engaging the one of the tool device and the work piece.

Optionally, actuating the clamp arm includes pivoting the clamp arm.

Optionally, actuating the clamp arm includes sliding the clamp arm.

Optionally, engaging the locking mechanism includes actuating an electromagnet on an arm that is attached to the servo actuator, the electromagnet being disposed adjacent to the tool device.

Optionally, the locking mechanism includes a toothed rack and a toothed pinion engaging the toothed rack.

Optionally, the locking mechanism further includes an actuator for engaging the toothed pinion in a fixed position.

Further areas of applicability will become apparent from the description provided herein. The description and specific examples in this summary are intended for purposes of illustration only and are not intended to limit the scope of the present disclosure.

### DRAWINGS

The drawings described herein are for illustrative purposes only of selected embodiments and not all possible implementations, and are not intended to limit the scope of the present disclosure.
FIG. 1 is a schematic view of a compliant ultrasonic tool with a locking assembly according to a first example embodiment;
FIG. 2 is a schematic view of a compliant ultrasonic tool with a locking assembly according to a second example embodiment;
FIG. 3 is a schematic view of a compliant ultrasonic tool with a locking assembly according to a third example embodiment;
FIG. 4 is a schematic view of a compliant ultrasonic tool with a locking assembly according to a fourth example embodiment;
FIG. 5 is a schematic view of a compliant ultrasonic tool with a locking assembly according to a fifth example embodiment; and
FIG. 6 is a schematic view of a compliant ultrasonic tool with a locking mechanism according to a sixth example embodiment.

Corresponding reference numerals indicate corresponding parts throughout the several views of the drawings.

### DETAILED DESCRIPTION

Example embodiments will now be described more fully with reference to the accompanying drawings.

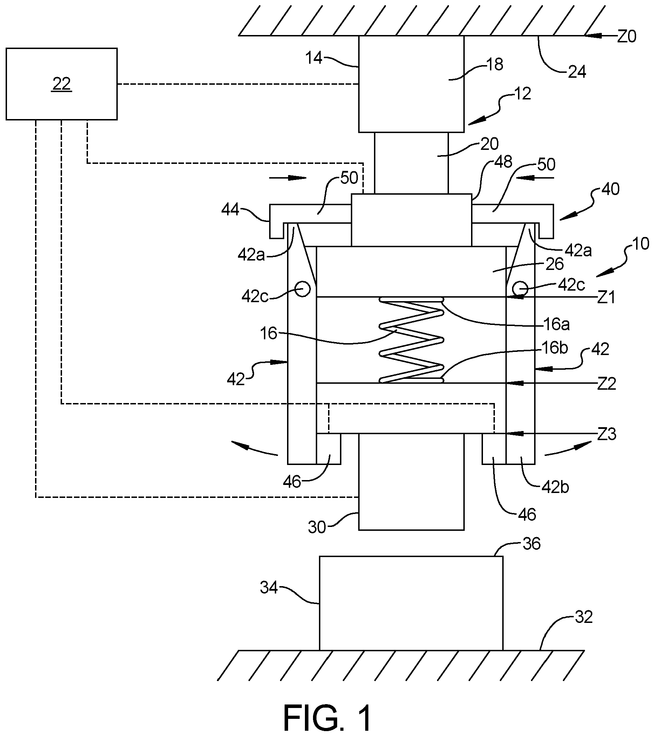

FIGS. 1-5 show different example embodiments of work piece processing devices 10, 110, 210, 310, 410 having a servo-elastic actuator system and alternative locking mechanisms. The work piece processing devices 10, 110, 210, 310, 410 can be any device that applies force to the work piece during processing. The work piece processing devices can, for example, be devices for ultrasonic, vibration, laser, thermal, spin or infrared processing of plastics or metal where force is applied to the work piece, such as welding, staking, swaging, and cutting. The work piece processing systems can also be devices where force is applied to the work piece to hold it in place during processing as disclosed in U.S. Patent No. 10,864,608, which is herein incorporated by reference.

With reference to FIGS. 1-5, a work piece processing device 10, 110, 210, 310, 410 includes a servo-elastic actuator system 12. Servo-elastic actuator system 12 includes a servo-actuator 14 and an elastic member 16. The elastic member 16 can take on any form including one or more springs or elastic members or combinations thereof. Servo-actuator 14 includes a servo-motor 18 and an actuator member 20 coupled to servo-motor 18 that is moved up and down (as oriented in the drawings) by servo-motor 18. Servo-motor 18 is coupled to a controller 22 that controls servo-motor 18. Servo-motor 18 is affixed to a frame 24 of devices 10, 110, 210, 310, 410. An end 16a of elastic member 16 is affixed to an end 26 of actuator member 20 and an opposite end 16b of elastic member 16 is affixed to a tool device/horn 30. Devices 10, 110, 210, 310, 410 also include a work piece holder 32, which for example could be an anvil of an ultrasonic welder or ultrasonic tube sealer. Work piece holder 32 can be affixed to frame 24 of devices 10, 110, 210, 310, 410. A work piece 34, which has a relatively non-compliant or stiff surface 36, is situated on work piece holder 32. Work piece 34 is a work piece that is to be processed by devices 10, 110, 210, 310, 410. Work piece 34 can for example be two plastic or metal pieces that are to be ultrasonically welded together when devices 10, 110, 210, 310, 410 are an ultrasonic welder. Work piece 34 can for example be a tube that is to have an end ultrasonically sealed when devices 10, 110, 210, 310, 410 are an ultrasonic tube sealer. Tool device 30 is that part of work piece processing device that is pressed against work piece 34 by the movement of servo-actuator 14 to process work piece 34. Tool device 30 may for example be an ultrasonic stack of an ultrasonic welder or an ultrasonic sealer and a tip of an ultrasonic horn of the ultrasonic stack is what physically contacts work piece 34. In such cases, tool device 30 is energized ultrasonically to work on work piece 34 to process it, such as by ultrasonic welding or ultrasonic sealing, as applicable. The tool device 30 can be controlled by the controller 22. The servo-elastic actuator system of the work piece processing device can take on various alternative arrangements, such as disclosed in U.S. Patent No. 10, 864,608 and the servo-elastic actuator system can be used to support and move the work piece relative to the tool device 30.

One or more of the elements disclosed above including controller 22 may include or be implemented in one or more processing circuitries such as hardware including logic circuits; a hardware/software combination such as a processor executing software; or a combination thereof. For example, the processing circuitries more specifically may include, but is not limited to, a central processing unit (CPU), an arithmetic logic unit (ALU), a digital signal processor, a microcomputer, a field programmable gate array (FPGA), a System-on-Chip (SoC), a programmable logic unit, a microprocessor, application-specific integrated circuit (ASIC), etc.

With reference to FIG. 1, the work piece processing device 10 includes a locking mechanism 40 according to a first example embodiment. The locking mechanism 40 includes a pair of locking brackets 42 that can have an upper end 42a that are engaged by a clamp member 44 and can have a lower end 42b that can optionally include electro-magnets 46 that engage a portion of the tool device 30 to prevent expansion of the elastic member or spring 16. The electro-magnets 46 can be actuated to magnetically engage the tool device 30 and deactivated to disengage from the tool device 30. The actuation of the clamp member 44 of the upper end 42a allows the locking brackets 42 to engage the tool device 30 and prevent extension of the elastic member 16 during lowering of the tool device 30. The lower end 42b of the locking brackets 42 can be vertically adjusted to accommodate for heavier or lighter tool devices 30, which will stretch the elastic member or spring 16 to different degrees. Once a position is settled, the lower end 42b of the bracket 42 can be locked into position and prevent any further extension of the assembly. The clamp member 44 can include an electro-magnetic actuator 48 that pulls the clamp arms 50 inward to pivot the locking brackets 42 about pivots 42c out of engagement with the tool device 30 so that the locking brackets do not inhibit motion of the tool device 30. The electro-magnetic actuator 48 can be controlled by the controller 22. It should be understood that the locking brackets 42 and actuator 44 can take on alternative forms.

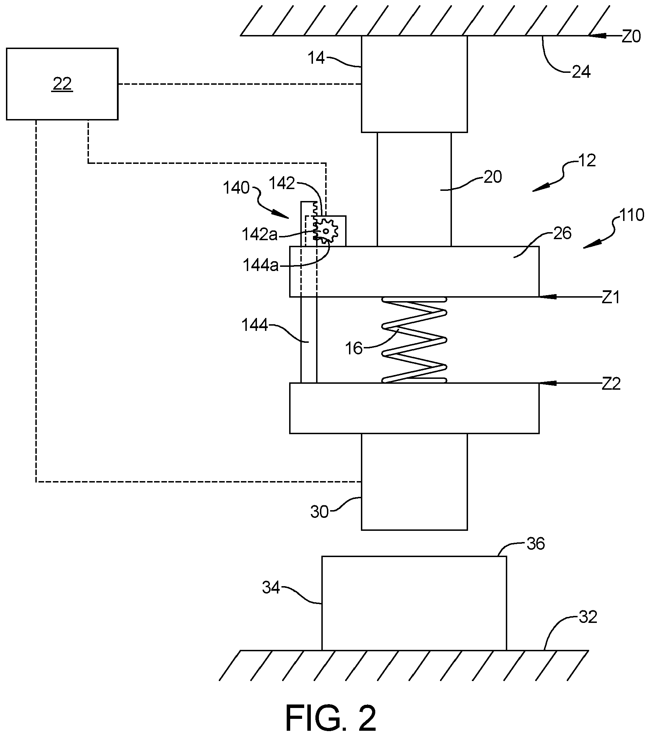

With reference to FIG. 2, the work piece processing device 110 includes a locking mechanism 140 that includes a locking actuator 142 that is mounted to the end 26 of the actuator member 20 and has an actuator arm 144 that engages the tool device 30. The locking actuator 142 can be actuated in a locked state to engage actuator arm 144 to prevent relative movement between the tool device 30 and the actuator member 20. The locking actuator 142 can be deactivated to allow relative movement of the actuator arm 144 and thereby allow the tool device 30 to move freely relative to the actuator member 20 so that the spring 16 can provide compliance in the system. By way of non-limiting example, the locking actuator 142 can include a pinion 142a and the actuator arm 144 can include a rack portion 144a. The locking actuator 142 can be engaged to prevent rotation of the pinion 142a or can be disengaged to allow rotation of the pinion 142a. The locking actuator 142 can include a servo device that is controlled by the controller 22 to engage the pinion 142a and prevent rotation thereof. Other alternative forms of locking actuators 142 can also be provided. Although one locking mechanism 140 is shown multiple locking mechanisms can also be provided.

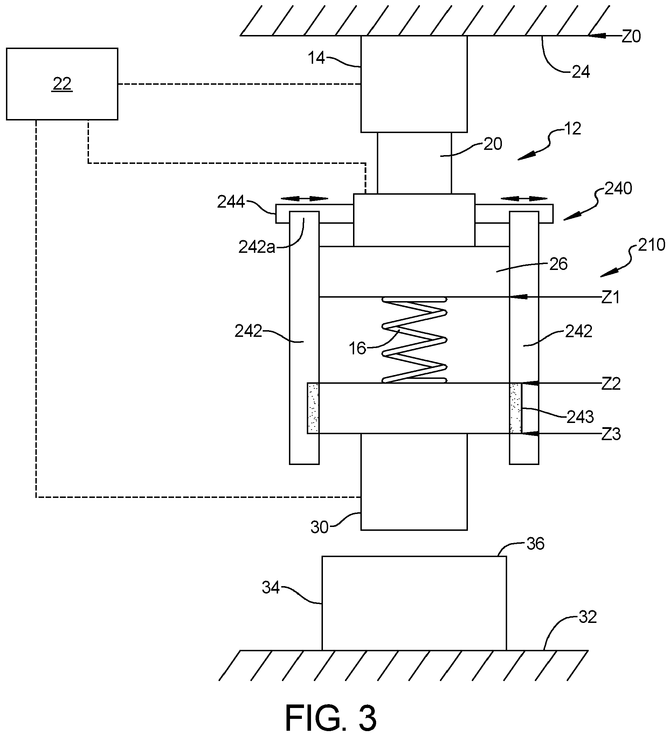

With reference to FIG. 3, the work piece processing device 210 includes a locking mechanism 240 that can include a clamp 244 that can be mounted to the actuator member 20 and can be frictionally engaged and disengaged with the tool device 30 to prevent or allow the tool device 30 to move freely relative to the actuator member 20 so that the spring 16 can provide compliance in the system. The locking mechanism 240 includes one or more locking brackets 242 that can have an upper end 242a that are engaged by a clamp member 244 and have a lower end 242b that engage a portion of the tool device 30 to prevent expansion of the elastic member or spring 16. The lower end 242b of the pair of locking brackets 242 can include a friction enhancement or damping material 243 such as a foam, rubber, or other elastomeric material for increasing the friction or damping motion between the pair of locking brackets and the tool device 30.

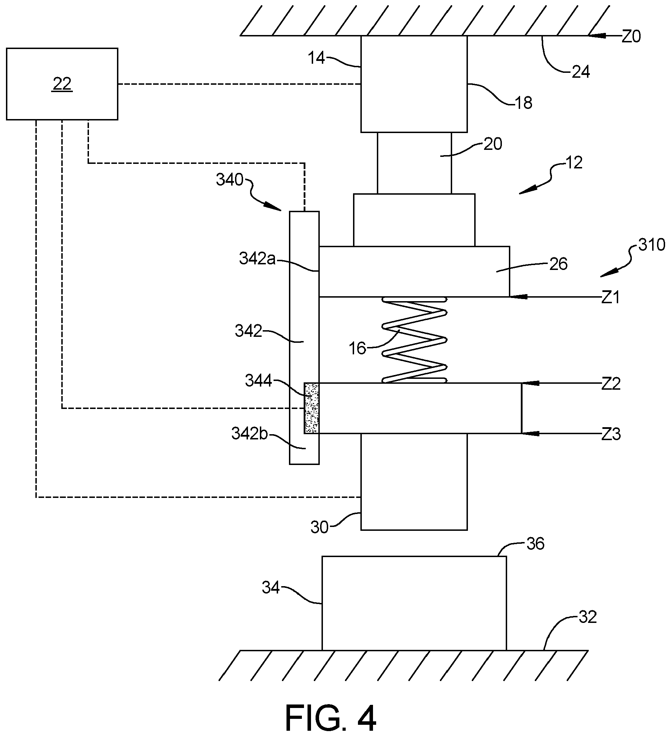

With reference to FIG. 4, the work piece processing device 310 includes a locking mechanism 340 according to a fourth example embodiment. The locking mechanism 340 includes one or more brackets 342 that have an upper end 342a that is fixed to the end 26 of the actuator member 20 and can have a lower end 342b that includes one or more electromagnets 344 that can be activated to restrict movement of the tool device 30 relative to the actuator member 20 and prevent extension of the spring 16, when desired.

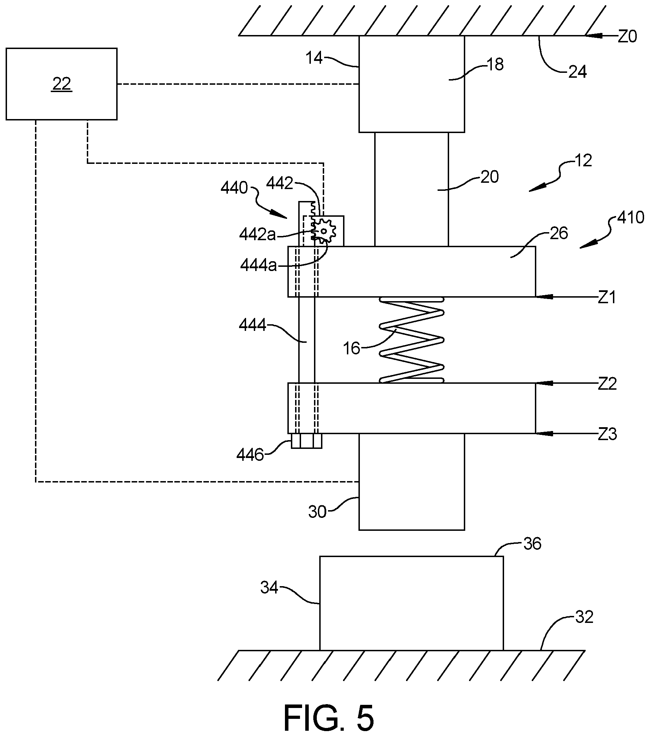

With reference to FIG. 5, the work piece processing device 410 includes a locking mechanism 440 that includes a locking actuator 442 that is mounted to the end 26 of the actuator member 20 and has an actuator arm 444 with a hard stop 446 that engages the tool device 30. The locking actuator 442 can be actuated in a locked state to engage actuator arm 444 and fix the location of the hard stop 446 between the tool device 30 and the actuator member 20. The locking actuator 442 can be adjusted to vertically move the actuator arm 444 and adjust the location of the hard stop 446 for tool devices 30 that are heavier or lighter. By way of non-limiting example, the locking actuator 442 can include a motor operated pinion 442a and the actuator arm 444 can include a rack portion 444a. The locking actuator 442 can be engaged to prevent rotation of the pinion 442a or can be disengaged to allow rotation of the pinion 442a. The locking actuator 442 can include a servo motor that is controlled by the controller 22 to rotate the pinion 442a or prevent rotation thereof.

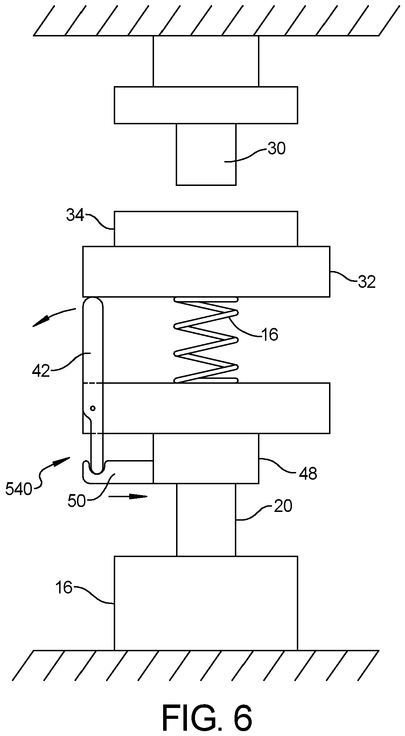

With reference to FIG. 6, the work piece processing device 510 is shown including a servo-elastic actuator including actuator 20 and spring 16 for moving the work piece holder 32 and work piece 34 toward the tool device 30 which can be held stationary. A locking mechanism 540 can include an arm 42 that can be moved into engagement with the work piece holder 32 to lock out the spring mechanism 16. The arm 42 can be moved to a disengaged position by an actuator 48 and a clamp arm 50 that pivot the arm 42 into and out of engagement with the work piece holder 32. It should be understood that the locking mechanism 540 can take on alternative forms and can include one of the mechanisms 40, 140, 240, 340 and 440.

In operation, the work piece 34 is placed on the work piece holder 32 and the locking mechanism 40, 140, 240, 340, 440, 540 is engaged in order to prevent or inhibit the relative movement of the tool device 30 or work piece holder 34 relative to the actuator member 20 as one of the tool device 30 and work piece holder is moved toward the other of the tool device 30 and the work piece holder 32 by the actuator member 20. Accordingly, the locking mechanism 40, 140, 240, 340, 440, 540 prevents the harmonic movement of the tool device 30 or the work piece holder 32 as the tool device 30 or work piece holder 32 is moved toward the other of the tool device 30 or work piece holder 32. Accordingly, the tool device 30 or work piece holder 32 can be moved at higher velocities and/or heavier tool devices can be used while maintaining control of the movement thereof. The locking mechanism 40, 140, 240, 340, 440, 540 can then be disengaged and the tool device 30 can then be activated by the controller 22 to perform the desired processing to the work piece 34. The spring 16 provides compliance that allows for lower force profiles and more repeatable force profiles.

Example embodiments are provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on," "engaged to," "connected to," or "coupled to" another element or layer, it may be directly on, engaged, connected, or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer, or section. Terms such as "first," "second," and other numerical terms when used herein do not imply a sequence or order unless clearly indicated by the context. Thus, a first element, component, region, layer, or section discussed below could be termed a second element, component, region, layer, or section without departing from the teachings of the example embodiments.

Spatially relative terms, such as "inner," "outer," "beneath," "below," "lower," "above," "upper," and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. A work piece processing tool, comprising:
a tool device and a work piece;
a servo-elastic actuator system including a servo actuator and a compliance elastic member, wherein the servo-elastic actuator system moves one of the tool device and the work piece toward the other of the tool device and the work piece; and
a locking mechanism for locking out the compliance elastic member to limit movement of the one of the tool device and work piece holder relative to the servo actuator.

2. The work piece processing tool according to claim 1, wherein the locking mechanism includes an actuator and a clamp mechanism that is operably engageable with the one of the tool device and the work piece holder.

3. The work piece processing tool according to claim 2, wherein the clamp mechanism includes an electromagnet that is magnetically engageable with the one of the tool device and the work piece holder.

4. The work piece processing tool according to claim 2, wherein the clamp mechanism includes at least one pivot arm that is pivotally actuated by the actuator.

5. The work piece processing tool according to claim 2, wherein the clamp mechanism includes at least one arm that is slidably actuated by the actuator.

6. The work piece processing tool according to claim 2, wherein the clamp mechanism includes at least one arm having a damping material for engaging the one of the tool device and work piece holder.

7. The work piece processing tool according to claim 1, wherein the locking mechanism includes at least one arm including an electromagnet that is magnetically engageable with the one of the tool device and work piece holder.

8. The work piece processing tool according to claim 1, wherein the locking mechanism includes an arm attached to the one of the tool device and the work piece holder and an actuator that lockingly engages the arm to the servo actuator;
optionally wherein the at least one arm includes a toothed rack and the actuator includes a toothed pinion that engages the toothed rack.

9. The work piece processing tool according to claim 1, wherein the locking mechanism includes an arm having a stop member at a first end and engaged by an actuator at a second end;
optionally wherein the arm includes a toothed rack and the actuator includes a toothed pinion that engages the toothed rack.

10. A method of operating a work piece processing tool having a tool device for processing a work piece and including a servo-elastic actuator system including a servo actuator and a compliance elastic member, wherein the servo-elastic actuator system moves one of the tool device and the work piece toward the other of the tool device and the work piece, comprising:
engaging a locking mechanism between the one of the tool device and the work piece and the servo actuator;
actuating the servo actuator to move the one of the tool device and the work piece toward the other of the tool device and the work piece;
disengaging the locking mechanism; and
actuating the tool device and the servo-actuator to perform a desired processing of the work piece.

11. The method according to claim 10, wherein the engaging a locking mechanism includes actuating a clamp arm to connect the one of the tool device and the work piece to the servo actuator.

12. The method according to claim 11, wherein the clamp arm includes an electromagnet for engaging the one of the tool device and the work piece; and/or
wherein the clamp arm includes a damping material for engaging the one of the tool device and the work piece.

13. The method according to claim 11, wherein actuating the clamp arm includes pivoting the clamp arm; and/or
wherein actuating the clamp arm includes sliding the clamp arm.

14. The method according to claim 10, wherein engaging the locking mechanism includes actuating an electromagnet on an arm that is attached to the servo actuator, the electromagnet being disposed adjacent to the tool device.

15. The method according to claim 11, wherein the locking mechanism includes a toothed rack and a toothed pinion engaging the toothed rack;
optionally wherein the locking mechanism further includes an actuator for engaging the toothed pinion in a fixed position.
